# EUROPEAN PATENT SPECIFICATION

(11) **EP 3 277 947 B1**
(45) Date of publication and mention of the grant of the patent: **17.07.2024**
(21) Application number: 16712919.6
(22) Date of filing: 31.03.2016
(51) Int. Cl.: F02N 11/08

(54) **CONTROL APPARATUS**
STEUERUNGSVORRICHTUNG
APPAREIL DE COMMANDE

(30) Priority: 01.04.2015 GB 201505640
(43) Date of publication of application: 07.02.2018
(73) Proprietor: Jaguar Land Rover Limited, Coventry, Warwickshire CV3 4LF (GB)
(72) Inventor: SINGH, Harpreet, Coventry Warwickshire CV3 4LF (GB)
(74) Representative: Jaguar Land Rover Patents Department
(86) International application number: PCT/EP2016/057124
(87) International publication number: WO 2016/156525

(56) References cited:
- EP-A1- 2 014 524
- EP-A2- 1 657 436
- DE-A1- 102006 059 593
- DE-A1- 102012 209 530
- JP-A- 2012 172 637
- JP-A- 2014 141 895
- JP-A- H1 130 173
- US-A1- 2003 135 321
- US-A1- 2014 114 539

## Description

### TECHNICAL FIELD

The present disclosure relates to a control apparatus for automatically starting an internal combustion engine in a vehicle. Aspects of the invention relate to an apparatus, to a method and to a vehicle.

### BACKGROUND

In automotive vehicles it is common for the driver to operate an ignition device to start the internal combustion engine. The ignition device can take the form of a mechanism for receiving an electronic remote control, such as a key fob. It is known to use the electronic remote control to provide a so-called "keyless" ignition system which automatically interrogates the electronic remote control and, provided it is authenticated, allows the driver to start the internal combustion engine by depressing a starter button or the like.

DE 10 2006 059593 A1 describes a motor vehicle which as a pedal and a control unit, which is arranged such that the motor vehicle is switched from a first operation condition ("ignition off") to a second operating condition ("ignition on") by operation of the pedal.

It will be appreciated that the prior art arrangements require the driver to perform an additional step positively to request that the internal combustion engine is started. It is against this background that the present invention has been conceived.

### SUMMARY OF THE INVENTION

Aspects of the present invention relate to apparatus for controlling start-up of an internal combustion engine; and to a vehicle.

According to an aspect of the present invention there is provided a control apparatus for automatically activating a vehicle propulsion apparatus when the vehicle propulsion apparatus is initially switched off, the control apparatus comprising:
a controller comprising an electronic processor having an electrical input for receiving at least a first control signal generated in dependence on driver operation of a transmission controller and/or a primary vehicle control which controls a dynamic function of the vehicle;
an electronic memory device electrically coupled to the electronic processor and having instructions stored therein;
wherein the electronic processor is configured to access the memory device and execute the instructions stored therein such that it is operable to:
   receive said first control signal from the first vehicle control;
   receive an auxiliary signal from one or more auxiliary vehicle systems; and
   in dependence on said first control signal, output at least a first activation signal for automatically activating the vehicle propulsion apparatus;
   wherein the auxiliary signal comprises a gaze tracking signal received from an eye-tracking device, the gaze tracking signal indicating the direction in which the driver is looking, the first activation signal being output only when the gaze tracking signal indicates that the driver is looking in a predetermined region.

The control apparatus may be configured automatically to activate the vehicle propulsion apparatus (in other words to provide "automated activation" of the vehicle propulsion apparatus). The control apparatus may monitor driver behaviour and is operable automatically to output the first activation signal to activate the vehicle propulsion apparatus. At least in certain embodiments the vehicle propulsion apparatus may be activated without the driver having to actuate a dedicated activation device, such as an ignition switch (for example using an ignition key) or a starter button. The start-up of the vehicle propulsion apparatus may thereby be expedited. The transmission controller and the primary vehicle control are disposed inside the vehicle and may be actuated by the driver when they are inside the vehicle cabin.

The control apparatus may interrogate an electronic key, such as a key fob, to determine that the driver is authorised to drive the vehicle. The interrogation of the electronic key can, for example, be performed wirelessly using known techniques. The control apparatus may be configured to output the first activation signal only once the interrogation has been successfully completed.

The vehicle propulsion apparatus may comprise an internal combustion engine and/or an electric traction machine. The internal combustion engine may be the sole torque generating device for propelling the vehicle. In the case of a hybrid vehicle, the internal combustion engine may be supplemented with the electric traction machine. In the case of an electric vehicle, the electric traction machine may be the sole torque generating device for propelling the vehicle.

The vehicle propulsion apparatus is initially switched off. The first activation signal may be configured to activate or partially activate the vehicle propulsion apparatus. The first activation signal can, for example, start the vehicle propulsion apparatus. Alternatively, the first activation signal may switch the vehicle propulsion apparatus to a power mode ready for starting.

The first control signal may comprise a transmission control signal. The transmission control signal may be generated in dependence on driver operation of the transmission controller, for example to engage a gear in a manual transmission or to select drive (D) in an automatic transmission. The transmission controller may comprise a transmission selector for selecting an operating mode of the transmission. In an automatic transmission, the transmission selector may be operable to select park (P), drive (D) or reverse (R). The driver input to prompt output of the first control signal can, for example, comprise operating the transmission selector to change from park (P) to drive (D). The transmission selector can, for example, comprise a lever, a pedal, a dial, a knob, a paddle, a rotary dial or other selector operable to control the transmission.

In a manual transmission, the transmission controller may comprise a transmission selector for selecting a drive ratio of the transmission; and/or a clutch pedal. The transmission control signal may be generated in dependence on driver operation of the clutch pedal and/or the transmission selector. The transmission selector can, for example, comprise a hand-operated lever.

The transmission controller could also be configured to control a transfer case, for example to select a High or Low transfer ratio.

Alternatively, or in addition, the first control signal may comprise a primary vehicle control signal. The primary vehicle control signal may be generated by actuation by the driver of a primary vehicle control. In normal operation of the vehicle, the primary vehicle control provides control of a dynamic function of the vehicle. At least in certain embodiments, the primary vehicle control may consist of a steering wheel and/or a brake pedal and/or a throttle (accelerator) pedal. The control apparatus described herein may provide a secondary function for the primary vehicle control, namely initiating the engine start-up.

The first control signal may be output when the steering wheel is rotated through a predetermined angle, or rotated to a predetermined position. Alternatively, or in addition, the first control signal may be output when a first hand and/or a second hand are detected on the steering wheel of the vehicle. A further check could be performed to determine that said first hand and/or said second hand are in respective first and second angular positions on the steering wheel before the first control signal is output.

The first control signal may be output when the throttle pedal is displaced by a predetermined amount or to a predetermined position.

The first control signal may be output when the brake pedal is displaced by a predetermined amount, to a predetermined position, or a predetermined brake pressure is generated.

The electrical input may be suitable for receiving a second control signal from a second vehicle control. The electronic processor may be operable to receive said first control signal and said second control signal. The electronic processor may be configured to output the first activation signal and/or a second activation signal in dependence on said first and second control signals. It will be appreciated that there could be more than first and second control signals.

The first activation signal may be configured to switch the vehicle propulsion apparatus to a first power mode. The vehicle propulsion apparatus could be switched to a first power mode in dependence on said first control signal. The first power mode could correspond to a configuration in which the internal combustion engine is configured for starting, for example by engaging a starter motor. The second activation signal may be configured to switch the vehicle propulsion apparatus to a second power mode. The vehicle propulsion apparatus could be switched to a second power mode in dependence on said second control signal. The second power mode could, for example, be an ignition on power mode to start the internal combustion engine.

The electronic processor may be operable to output the first activation signal and/or the second activation signal in dependence on receipt of said first and second control signals in a predetermined activation sequence. The predetermined activation sequence may be generated in dependence on historic behaviour of a driver of the vehicle. The predetermined activation signal may comprise receiving the first control signal before or after the second control signal.

The electronic processor is operable to receive an auxiliary signal from one or more auxiliary vehicle systems.

The auxiliary signal may comprise a driver identification signal. The electronic processor may be operable in dependence on said driver identification signal. The first activation signal could be output only if the driver-identification signal identifies a predefined driver for the vehicle.

The auxiliary signal may comprise a door sensor signal and/or a weight sensor signal. The electronic processor may be operable in dependence on said door sensor signal and/or said weight sensor signal. The ingress of the driver into the vehicle could be determined with reference to said door sensor signal and/or said weight sensor signal.

The auxiliary signal is a gaze tracking signal from an eye-tracking device. The gaze tracking signal could indicate the direction in which the driver is looking. The first activation signal is output only when the gaze direction signal indicates that the driver is looking in a predetermined region, for example a predefined "eyes forward" gaze direction through a front windshield of the vehicle.

The first activation signal may comprise a vehicle propulsion apparatus start request. In the case of a powertrain comprising an internal combustion engine, an engine control unit may receive the first activation signal and start the internal combustion engine. For example, the engine control unit may energize a starter motor to crank the internal combustion engine. Alternatively, the first activation signal may comprise a starter motor engage request. The starter motor may be mechanically engaged in dependence on said first activation signal. For example, an engine control unit may operate a solenoid to mesh a pinion gear connected to the starter motor with a ring gear.

According to a further aspect of the present invention there is provided a vehicle comprising control apparatus for controlling activation a vehicle propulsion apparatus as described herein.

According to a further aspect of the present invention there is provided a method of automatically activating a vehicle propulsion apparatus when the vehicle propulsion apparatus is initially switched off, the method comprising:
receiving at least a first control signal generated in dependence on driver operation of a transmission controller and/or a primary vehicle control which controls a dynamic function of the vehicle;
receiving an auxiliary signal from one or more auxiliary vehicle systems; and
in dependence on said first control signal, output at least a first activation signal for automatically activating the vehicle propulsion apparatus;
wherein the auxiliary signal comprises a gaze tracking signal received from an eye-tracking device, the gaze tracking signal indicating the direction in which the driver is looking, the method comprising outputting the first activation signal only when the gaze tracking signal indicates that the driver is looking in a predetermined region.

The vehicle propulsion apparatus may comprise an internal combustion engine and/or an electric traction machine.

The first activation signal may place the vehicle propulsion apparatus in a first power mode.

The method may comprise receiving a second control signal from a second vehicle control; and outputting the first activation signal and/or a second activation signal in dependence on said first and second control signals. The second activation signal may place the vehicle propulsion apparatus in a second power mode.

The method may comprise outputting the first activation signal and/or the second activation signal in dependence on receipt of said first and second control signals in a predetermined activation sequence.

The predetermined activation sequence is determined in dependence on historic behaviour of a driver of the vehicle.

The method comprises receiving an auxiliary signal from one or more auxiliary vehicle systems. The auxiliary signal may comprise a driver identification signal. The auxiliary signal may comprise a door sensor signal and/or a weight sensor signal.

The first activation signal may comprise an engine start request. The first activation signal may comprise a starter motor engage request.

Within the scope of the claims of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment may be combined in any way and/or combination within the scope of the claims, unless such features are incompatible.

### BRIEF DESCRIPTION OF THE DRAWINGS

One or more embodiments of the present invention will now be described, by way of example only, with reference to the accompanying figures, in which:
Figure 1 shows a vehicle incorporating a control apparatus in accordance with an embodiment of the present invention; and
Figure 2 shows a schematic representation of the control apparatus in accordance with the embodiment of the present invention.

### DETAILED DESCRIPTION

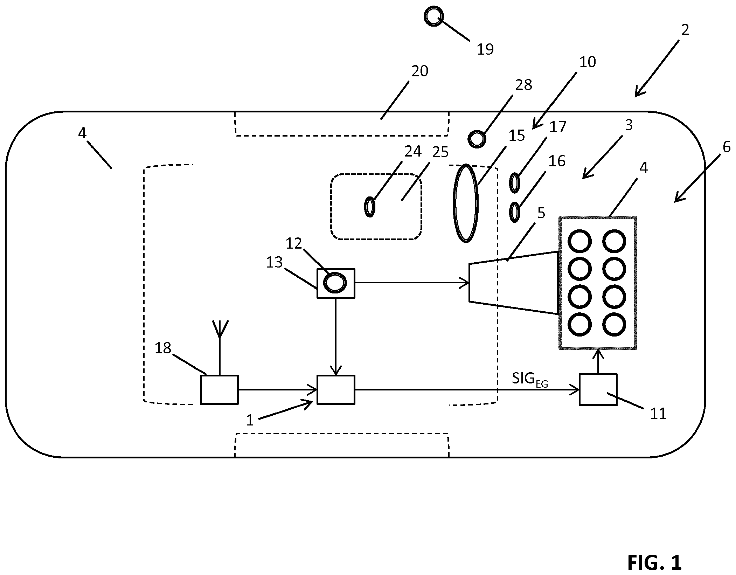

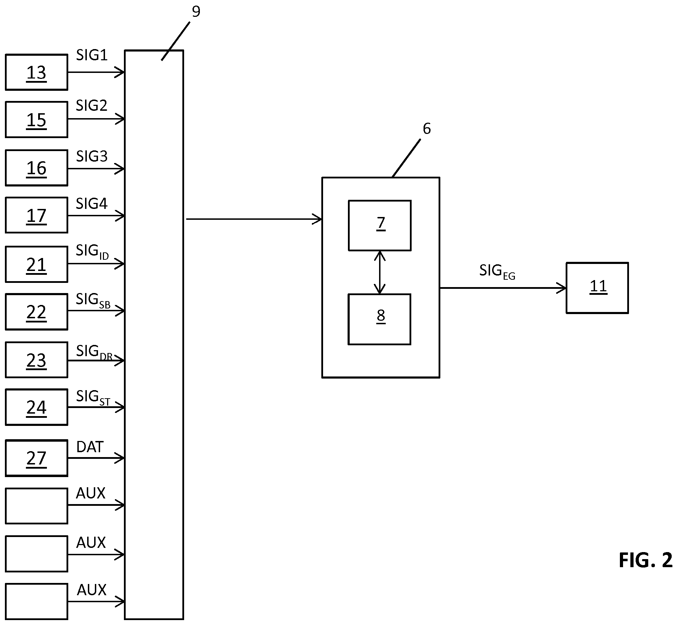

A control apparatus 1 for a vehicle 2 in accordance with an embodiment of the present invention will now be described with reference to Figures 1 and 2. The vehicle 2 comprises a powertrain 3 including a vehicle propulsion apparatus. The control apparatus 1 is configured automatically to activate the vehicle propulsion apparatus (referred to herein as "automated activation").

In the present embodiment the vehicle propulsion apparatus comprises an internal combustion engine 4. The internal combustion engine 4 is coupled to an automatic transmission 5. In the present embodiment the control apparatus 1 initiates start-up of the internal combustion engine 4 in dependence on driver behaviour (referred to herein as an "automated engine start-up"). Specifically, the control apparatus 1 is configured to monitor the driver behaviour and to perform the automated engine start-up without the need for the driver to perform a dedicated action to start the internal combustion engine 4.

The control apparatus 1 comprises a controller 6 having electronic processor 7 coupled to an electronic memory device 8. A set of instructions is stored in the electronic memory device 8 and, when executed, the instructions cause the electronic processor 7 to perform the automated engine start-up described herein. The electronic processor 7 has an electrical input for receiving signals published to a vehicle communication bus 9. In particular, the electronic processor 7 is configured to receive at least one vehicle control signal SIG generated by one or more vehicle control 10. The vehicle control 10 can control operation of a transmission 5; and/or dynamic operation of the vehicle 2. The electronic processor 7 is configured to output a propulsion control signal in the form of an engine control signal SIG_{EG} in dependence on one or more said vehicle control signal SIG. The engine control signal SIG_{EG} is transmitted to an engine controller 11 to perform the automated engine start-up of the internal combustion engine 4.

In the present embodiment, the control apparatus 1 is operable in dependence on a first control signal in the form of a transmission control signal SIG1. A transmission selector 12 is coupled to a transmission control unit (TCU) 13 to control operation of the transmission 5 to select one of a plurality of transmission modes: Park (P), Drive (D), Neutral (N) and Reverse (R). The TCU 13 outputs the transmission control signal SIG1 indicating the selected transmission mode in dependence on driver operation of the transmission selector 12. The control apparatus 1 is configured to output the engine control signal SIG_{EG} in dependence on receipt of the transmission control signal SIG1 indicating that Drive (D) has been selected by the driver.

Alternatively, or in addition, the control apparatus 1 is operable in dependence on one or more primary vehicle control signal received from a primary vehicle control configured to control dynamic operation of the vehicle 2. In the present embodiment the one or more primary vehicle control signal consist of: a steering control signal; and/or a brake control signal; and/or a throttle control signal. A second control signal SIG2 in the form of the steering control signal is transmitted to the electronic processor 7 when a steering wheel 15 is rotated; and/or a third control signal SIG3 in the form of the throttle control signal is transmitted to the electronic processor 7 when a throttle (accelerator) pedal 16 is actuated; and/or a fourth control signal SIG4 in the form of the brake control signal is transmitted to the electronic processor 7 when a brake pedal 17 is actuated.

The control apparatus 1 is configured to receive an auxiliary signal AUX from one or more vehicle auxiliary system, for example to implement safety and/or security features. The vehicle 2 comprises a remote keyless system 18 which communicates wirelessly with an electronic remote control 19 which is a key fob in the present embodiment. The remote keyless system 18 is operative to authenticate the electronic remote control 19 associated with the vehicle 2 to control locking/unlocking of one or more vehicle door 20. The remote keyless system 18 also provides keyless ignition control which allows the ignition to be switched on without the need to actuate the electronic remote control 19. The remote keyless system 18 is operable in dependence on a determined proximity of the electronic remote control 19. When the electronic remote control 19 is brought within a predetermined proximity of the vehicle 2 the driver door 20 is automatically unlocked. The electronic processor 7 is configured to enable the automated engine start-up only when the remote keyless system 18 has authenticated the electronic remote control 19. The control apparatus 1 could optionally be configured to require that the electronic remote control 19 is inside the vehicle 2 before enabling the automated engine start-up.

The vehicle 2 can comprise a driver identification module 21 for identifying the driver. The control apparatus 1 can be configured to enable the automated engine start-up only when certain predefined safety and security functions have been satisfied. The auxiliary vehicle systems can, for example, comprise a driver identification module 21 which outputs an identification signal SIG_{ID} to the electronic processor 7. The driver identification module 21 can be in the form of a driver-facing camera coupled to an image processing unit. The image processing unit can implement a facial recognition algorithm to analyse image data generated by the driver-facing camera in order to identify the driver of the vehicle 2. The driver identification module 21 can thereby identify the driver of the vehicle 2 and this is notified to the control apparatus 1 by the identification signal SIG_{ID}. The control apparatus 1 can selectively enable the automated engine start-up in dependence on the identification signal SIG_{ID}. For example, the automated engine start-up could only be enabled for one or more predetermined driver. The driver identification module 21 can thereby identify and distinguish the driver, for example to distinguish between an adult and a child on the driver seat 25, to reduce false start.

The control apparatus 1 can also monitor driver behaviour to implement predefined safety features. For example, the electronic processor 7 can be configured to receive a seatbelt signal SIG_{SB} from one or more seatbelt units 22 to indicate whether they are fastened or unfastened. A door state signal SIG_{DR} can be received from a door sensor 23 to indicate when the driver door 20 has been opened/closed. Moreover, a seat signal SIG_{ST} can be received from a weight sensor 24 disposed in a driver seat 25 to indicate when the driver seat 25 is occupied. The seatbelt unit 22, the door sensor 23 and the weight sensor 24 are illustrative of vehicle auxiliary systems which can be used by the control apparatus 1 to implement safety and/or security features. The control apparatus 1 can receive additional auxiliary signals AUX from the auxiliary vehicle systems.

The electronic processor 7 is also coupled to an electronic calendar (diary) 27 associated with a driver of the vehicle 2. The electronic calendar 27 can be stored locally in the vehicle 2, for example in the electronic memory device 8; or remotely, for example in a cellular telephone, and accessed over a wireless network. The electronic calendar 27 can contain journey data DAT, for example a departure time and date of a planned journey. The control apparatus 1 can use the journey data DAT as an additional input for controlling the internal combustion engine 4. For example, if the driver enters the vehicle 2 at a time shortly before a scheduled departure time for a particular journey, the control apparatus 1 can determine that the driver is likely to use the vehicle 2 to complete the journey. Accordingly, a decision to start the internal combustion engine 4 can be made with higher degree of certainty. The control apparatus 1 can use the electronic calendar 27 to adjust weightings (confidence values) of system variables. For example, a weighting associated with one or more auxiliary control input can be increased at a time substantially coincident with a departure time accessed from the electronic calendar 27. By way of example, a weighting associated with fastening the seatbelt unit 22 can be increased at the departure time.

The operation of the control apparatus 1 will now be described. The driver approaches the vehicle 2 with the electronic remote control 19 on their person. The remote keyless system 18 identifies the electronic remote control 19 (for example by transmitting a polling signal which prompts a response from the electronic remote control 19) and wirelessly interrogates the electronic remote control 19. If the interrogation authenticates the electronic remote control 19, the remote keyless system 18 unlocks the driver door 20 and activates the control apparatus 1. The control apparatus 1 monitors the door state signal SIG_{DR} and the seat signal SIG_{ST} to determine when the driver has entered the vehicle 2. When the driver is seated in the driver seat 25 and the driver door 20 is closed, the control apparatus 1 enables the automated engine start-up. As a safety requirement, the control apparatus 1 can optionally monitor the seatbelt signal SIG_{SB} and enable the automated engine start-up only when the seatbelt unit 22 associated with the driver seat is fastened. As a security requirement, the driver identification module 21 could optionally check the identity of the driver and enable the automated engine start-up only when the driver is positively identified.

The control apparatus 1 then seeks to identify a transmission control input by the driver to initiate the automated engine start-up. In the present embodiment the electronic processor 7 communicates with the vehicle communication bus 9 to detect transmission control signals. In particular, the TCU 13 outputs the first control signal SIG1 when the driver operates the transmission selector 12 and selects drive (D). In dependence on said first control signal SIG1, the electronic processor 7 outputs the engine control signal SIG_{EG} to the engine controller 11. In the present embodiment, the engine controller 11 is configured to initiate a start-up procedure for the internal combustion engine 4 (Ignition ON) in dependence on the engine control signal SIG_{EG}. The engine controller 11 engages a starter motor (not shown) which cranks the internal combustion engine 4 in conventional manner. Thus, the control apparatus 1 starts the internal combustion engine 4 as soon as the driver operates the TCU 13 to select drive (D). To the user it will appear that the vehicle 2 is in a start-stop mode.

The control apparatus 1 has been described as performing the automated engine start-up in dependence on receipt of the transmission control signal. In alternate embodiments, the automated engine start-up can be performed in dependence on one or more primary vehicle control input by the driver. By way of example in a variant the electronic processor 7 can be configured to output the engine control signal SIG_{EG} in dependence on the second control signal SIG2 generated by the steering wheel 15. The second control signal SIG2 could, for example, indicate that the steering wheel 15 has been rotated through a predetermined angular range or to a predetermined angular position. In a further variant, the electronic processor 7 can be configured to output the engine control signal SIG_{EG} in dependence on the third control signal SIG3 generated by the throttle pedal 16, for example indicating that the throttle pedal 16 has been depressed by at least a predetermined amount. In a still further variant, the electronic processor 7 can be configured to output the engine control signal SIG_{EG} in dependence on the fourth control signal SIG4 generated by the brake pedal 17, for example indicating that the brake pedal 17 has been depressed by at least a predetermined amount. The electronic processor 7 could be configured to require that the throttle pedal 16 or the brake pedal 17 are depressed for at least a threshold time period before outputting the engine control signal SIG_{EG}.

The operation of the control apparatus 1 can be modified such that the engine control signal SIG_{EG} is output in dependence on a plurality of control inputs by the driver. The electronic processor 7 can be configured to output the engine control signal SIG_{EG} only when two or more control signals SIG are detected. By way of example, the electronic processor 7 can be configured to output the engine control signal SIG_{EG} in dependence on the first control signal SIG1 generated by the TCU 13 in combination with the second control signal SIG2 generated by the steering wheel 15. The second control signal SIG2 could, for example, indicate that the steering wheel 15 has been rotated through a predetermined angular range or to a predetermined angular position. Alternatively, the electronic processor 7 can be configured to output the engine control signal SIG_{EG} in dependence on receipt of the first control signal SIG1 generated by the TCU 13 in combination with receipt of the third control signal SIG3 generated by the throttle pedal 16, for example indicating that the throttle pedal 16 has been depressed by at least a predetermined amount. This control strategy can be further refined to require that the vehicle control inputs are made in a predetermined activation sequence.

Although the control apparatus 1 described herein is configured to automate starting of the internal combustion engine 4, a starter button 28 can optionally be provided. The starter button 28 can be used in conjunction with the wireless ignition control to generate the engine control signal SIG_{EG} in conventional manner. The starter button 28 can also be used in conjunction with the control apparatus 1 to implement a learning function. The electronic processor 7 can be configured to identify a sequence of control inputs made by the driver prior to starting the internal combustion engine 4. This sequence of control inputs can be stored in the electronic memory device 8 as an activation sequence for prompting the output of the engine control signal SIG_{EG}. The electronic processor 7 can be configured to output the engine control signal SIG_{EG} in dependence on performance of said activation sequence of control inputs. Thus, the internal combustion engine 4 can be started automatically without the driver having to use the starter button 28. By using the learning function to determine an activation sequence for a plurality of control inputs, the control apparatus 1 can more closely match driver behaviour. The activation sequence could represent driver's behaviour in the vehicle 2 before starting a journey, for example fastening their seat belt, changing infotainment settings, selecting a memory setting on a powered seat, etc. Other control inputs that could be used include: operation of the steering wheel 15 (harsh, steady etc,), a grip pattern on the steering wheel 15.

It will be appreciated that other strategies could be employed to define an activation sequence of control inputs for the control apparatus 1. Rather than utilise the starter button 28, the learning function of the electronic processor 7 can be implemented by detecting a sequence of control inputs prior to use of the electronic remote control 19 to start the internal combustion engine 4. The starter button 28 could be omitted in certain embodiments.

In a further variant, the control apparatus 1 can be configured to output more than one engine control signal SIG_{EG}. For example, the control apparatus 1 can be configured to output a first engine control signal SIG_{EG1} in dependence on a first control input; and to output a second engine control signal SIG_{EG2} in dependence on a second control input. The first engine control signal SIG_{EG1} can be associated with a first power mode PM1 of the internal combustion engine 4; and the second engine control signal SIG_{EG2} can be associated with a second power mode PM2 of the internal combustion engine 4. The first power mode PM1 can configure the internal combustion engine 4 consistent with an automated stop/start mode with the ignition on and the ancillary systems activated. The second power mode PM2 can correspond to the internal combustion engine 4 running. The engine controller 11 can activate the first and second power modes PM1, PM2 in dependence on receipt of the first and second engine control signals SIG_{EG1}, SIG_{EG2} respectively. In use, the vehicle 2 will appear to the driver as if the internal combustion engine 4 is in a start-stop condition, and depressing the throttle pedal 16 will cause the internal combustion engine to start allowing the vehicle 2 to be driven.

The output of the first and second engine control signals SIG_{EG1}, SIG_{EG2} can be controlled in dependence on the information stored in the electronic calendar 27. The control apparatus 1 can examine the electronic calendar 27 to determine a departure time and determine if the internal combustion engine 4 should be prepared for the journey. In one implementation, the electronic processor 7 can be configured to output the first engine control signals SIG_{EG1} at a departure time (or a predetermined time period before the departure time) defined by the electronic calendar 27. When the driver is ready to depart, the internal combustion engine 4 can be started from this condition more quickly. In a further variant, a weighting associated with vehicle auxiliary inputs can be modified in dependence on the information in the electronic calendar 27. For example, a weighting associated with fastening the seatbelt unit 22 can be increased at the departure time stored in the electronic calendar 27. At the departure time, the control apparatus 1 can output the first engine control signal SIG_{EG1} when the user changes an infotainment setting; or directly output the second engine control signal SIG_{EG2} instead of waiting for driver to wear seat belt before initiating the automated engine start-up feature.

The control apparatus 1 can optionally also utilise one or more additional indicators to determine a confidence indication that the driver is ready to initiate a journey in the vehicle. The indicators can, for example, include a change in an infotainment setting, and/or connection of a cellular telephone to the vehicle. By monitoring usage of the vehicle systems, the control apparatus 1 can learn actions undertaken by a particular driver before starting their journey. Accordingly, the control apparatus 1 can use these indicators as a further confirmation measure.

By way of example, a cumulative confidence indication can be calculated using one or more of the following triggers: use a driver safety feature status to calculate a first confidence indication X (comprising determining whether the driver is ready for journey and then selecting an accessories on power mode for the vehicle propulsion apparatus); and a second confidence indication Y can be determined in dependence on steering rotation, pressure on pedals, gear change, eye gaze on road ahead. The cumulative confidence indication can be determined by adding the first and second confidence indications (X+Y) and activating the vehicle propulsion apparatus in dependence on the calculated cumulative confidence indication. The driver electronic calendar 27 can optionally provide a third confidence indication Z in dependence on when a driver is expected to start a journey. For example, the control apparatus 1 can identify a meeting in the electronic calendar 27 and estimate the time required to travel to a specified location for the meeting. A departure time for the journey can be estimated and the estimated departure time used as a further indicator that the driver is entering in the vehicle to initiate the journey. The third confidence indication Z can be added to the first and second confidence indications (i.e. X+Y+Z).

Initial low confidence indication triggers include one or more of the following: seating position (confidence factor a1), infotainment change (confidence factor a2), phone connecting to vehicle system (confidence factor a3), mirror setting adjustment (confidence factor a4). By default, low confidence factors could not generate the activation signal to activate the vehicle propulsion apparatus. This control strategy is intended to avoid a false start scenario which can increase fuel consumption and driver annoyance. As the driver uses the vehicle, the control apparatus 1 can learn driver behaviour and a sequence of actions associated with the driver. These factors can be used to increase the confidence indication, for example the control apparatus 1 can learn driver behaviour comprises a1, X, a2 and, in dependence on detection of this sequence of actions, the control apparatus 1 can identify with a higher degree of confidence that the vehicle propulsion apparatus should be activated. This could be used in future to reduce the number of actions required by the driver.

For integration of the electronic calendar 27, the control apparatus 1 can learn how the driver usually starts a journey when there is a meeting stored in the electronic calendar 27. This can be used in future to learn a preferred time that the driver will start the journey, for example a margin for a journey can be determined based on the time the driver enters the vehicle and the estimated journey time. This learning will increase the confidence indication calculated in dependence on the electronic calendar 27 (allowing a calculated departure time or a time margin to be calculated more precisely).

It will be appreciated that various changes and modifications can be made to the control apparatus 1 described herein without departing from the scope of the present invention as defined by the claims.

## Claims

1. A control apparatus (1) for automatically activating a vehicle propulsion apparatus (4) when the vehicle propulsion apparatus (4) is initially switched off, the control apparatus (1) comprising:
a controller (6) comprising an electronic processor (7) having an electrical input for receiving at least a first control signal generated in dependence on driver operation of a transmission controller (13) and/or a primary vehicle control (15, 16, 17) which controls a dynamic function of a vehicle (2);
an electronic memory device (8) electrically coupled to the electronic processor (7) and having instructions stored therein;
wherein the electronic processor (7) is configured to access the memory device (8) and execute the instructions stored therein such that it is operable to:
receive said first control signal from the first vehicle control (10);
receive an auxiliary signal (AUX) from one or more auxiliary vehicle systems; and
in dependence on said first control signal, output at least a first activation signal (SIG_{EG1}) for automatically activating the vehicle propulsion apparatus (4);
wherein the auxiliary signal (AUX) comprises a gaze tracking signal received from an eye-tracking device, the gaze tracking signal indicating the direction in which the driver is looking, the first activation signal (SIG_{EG1}) being output only when the gaze tracking signal indicates that the driver is looking in a predetermined region.

2. A control apparatus (1) as claimed in claim 1, wherein the first activation signal (SIG_{EG1}) comprises a request to place the vehicle propulsion apparatus (4) in a first power mode.

3. A control apparatus (1) as claimed in claim 1 or claim 2, wherein the electrical input is suitable for receiving a second control signal from a second vehicle control;
wherein the electronic processor (7) is operable to:
receive said first control signal and said second control signal; and
output the first activation signal (SIG_{EG}) and/or a second activation signal (SIG_{EG2}) in dependence on said first and second control signals, the second activation signal (SIG_{EG2}) optionally comprising a request to place the vehicle propulsion apparatus (4) in a second power mode.

4. A control apparatus (1) as claimed in claim 3, wherein the electronic processor (7) is operable to output the first activation signal (SIG_{EG}) and/or the second activation signal (SIG_{EG2}) in dependence on receipt of said first and second control signals in a predetermined activation sequence.

5. A control apparatus (1) as claimed in any preceding claim, wherein the control apparatus is configured to interrogate an electronic key to determine that the driver is authorised to drive the vehicle, and to output the first activation signal only once the interrogation has been successfully completed.

6. A control apparatus (1) as claimed in any one of the preceding claims, wherein the auxiliary signal (AUX) comprises a driver identification signal, the electronic processor (7) being operable in dependence on said driver identification signal; wherein the auxiliary signal (AUX) optionally comprises a door sensor (23) signal and/or a weight sensor (24) signal, the electronic processor (7) being operable in dependence on said door sensor (23) signal and/or a weight sensor (24) signal.

7. A control apparatus (1) as claimed in any one of the preceding claims, wherein said vehicle propulsion apparatus (4) comprises an internal combustion engine (4) and/or an electric traction machine; and/or
the first activation signal (SIG_{EG1}) comprises an engine start request and/or a starter motor engage request.

8. A method of automatically activating a vehicle propulsion apparatus (4) when the vehicle propulsion apparatus (4) is initially switched off, the method comprising:
receiving at least a first control signal generated in dependence on driver operation of a transmission controller (13) and/or a primary vehicle control (15, 16, 17) which controls a dynamic function of the vehicle (2);
receiving an auxiliary signal (AUX) from one or more auxiliary vehicle systems; and
in dependence on said first control signal, output at least a first activation signal for automatically activating the vehicle propulsion apparatus (4);
wherein the auxiliary signal (AUX) comprises a gaze tracking signal received from an eye-tracking device, the gaze tracking signal indicating the direction in which the driver is looking, the method comprising outputting the first activation signal (SIG_{EG1}) only when the gaze tracking signal indicates that the driver is looking in a predetermined region.

9. A method as claimed in claim 8 comprising placing the vehicle propulsion apparatus (4) in a first power mode in dependence on the first activation signal (SIG_{EG1}).

10. A method as claimed in any one of claims 8 or claim 9 comprising:
receiving a second control signal from a second vehicle control; and
outputting the first activation signal (SIG_{EG1}) and/or a second activation signal (SIG_{EG2}) in dependence on said first and second control signals;
the method optionally comprising placing the vehicle propulsion apparatus (4) in a second power mode in dependence on the second activation signal (SIG_{EG2}).

11. A method as claimed in as claimed in claim 10 comprising outputting the first activation signal (SIG_{EG1}) and/or the second activation signal (SIG_{EG2}) in dependence on receipt of said first and second control signals in a predetermined activation sequence.

12. A method as claimed in any one of claims 8 to 11, wherein the auxiliary signal (AUX) comprises a driver identification signal; the auxiliary signal (AUX) optionally comprising a door sensor (23) signal and/or a weight sensor (24) signal.

13. A method as claimed in any one of claims 8 to 12, wherein the first activation signal (SIG_{EG1}) comprises an engine start request or a starter motor engage request.

14. A vehicle comprising a control apparatus (1) as claimed in any one of claims 1 to 7.

## Patentansprüche

1. Steuereinrichtung (1) zum automatischen Aktivieren einer Fahrzeugantriebseinrichtung (4), wenn die Fahrzeugantriebseinrichtung (4) anfänglich ausgeschaltet ist, die Steuereinrichtung (1) umfassend:
ein Steuergerät (6), umfassend einen elektronischen Prozessor (7), der einen elektrischen Eingang zum Empfangen mindestens eines ersten Steuersignals aufweist, das in Abhängigkeit einer Fahrerbetätigung eines Getriebesteuergeräts (13) und/oder einer primären Fahrzeugsteuerung (15, 16, 17) erzeugt wird, die eine dynamische Funktion eines Fahrzeugs (2) steuert;
eine elektronische Speichervorrichtung (8), die mit dem elektronischen Prozessor (7) elektrisch gekoppelt ist und Anweisungen aufweist, die darin gespeichert sind;
wobei der elektronische Prozessor (7) konfiguriert ist, um auf die Speichervorrichtung (8) zuzugreifen und die Anweisungen, die darin gespeichert sind, derart auszuführen, dass er betriebsfähig ist zum:
Empfangen des ersten Steuersignals von der ersten Fahrzeugsteuerung (10);
Empfangen eines zusätzlichen Signals (AUX) von einem oder mehreren zusätzlichen Fahrzeugsystemen; und
in Abhängigkeit des ersten Steuersignals, Ausgeben mindestens eines ersten Aktivierungssignals (SIG_{EG1}) zum automatischen Aktivieren der Fahrzeugantriebseinrichtung (4);
wobei das zusätzliche Signal (AUX) ein Blickverfolgungssignal umfasst, das von einer Augenverfolgungsvorrichtung empfangen wird, wobei das Blickverfolgungssignal die Richtung angibt, in die der Fahrer schaut, und wobei das erste Aktivierungssignal (SIG_{EG1}) nur ausgegeben wird, wenn das Blickverfolgungssignal angibt, dass der Fahrer in einen vorgegebenen Bereich schaut.

2. Steuereinrichtung (1) nach Anspruch 1, wobei das erste Aktivierungssignal (SIG_{EG1}) eine Anforderung umfasst, die Fahrzeugantriebseinrichtung (4) in einen ersten Leistungsmodus zu versetzen.

3. Steuereinrichtung (1) nach Anspruch 1 oder 2, wobei der elektrische Eingang zum Empfangen eines zweiten Steuersignals von einer zweiten Fahrzeugsteuerung geeignet ist;
wobei der Prozessor (7) betriebsfähig ist zum:
Empfangen des ersten Steuersignals und des zweiten Steuersignals; und
Ausgeben des ersten Aktivierungssignals (SIG_{EG1}) und/oder eines zweiten Aktivierungssignals (SIG_{EG2}) in Abhängigkeit des ersten und des zweiten Steuersignals, das zweite Aktivierungssignal (SIG_{EG2}) optional umfassend eine Anforderung, die Fahrzeugantriebseinrichtung (4) in einen zweiten Leistungsmodus zu versetzen.

4. Steuereinrichtung (1) nach Anspruch 3, wobei der elektronische Prozessor (7) betriebsfähig ist, um das erste Aktivierungssignal (SIG_{EG1}) und/oder das zweite Aktivierungssignal (SIG_{EG2}) in Abhängigkeit eines Empfangs des ersten und des zweiten Steuersignals in einer vorgegebenen Aktivierungssequenz auszugeben.

5. Steuereinrichtung (1) nach einem der vorstehenden Ansprüche, wobei die Steuereinrichtung konfiguriert ist, um einen elektronischen Schlüssel abzufragen, um zu bestimmen, ob der Fahrer berechtigt ist, das Fahrzeug zu fahren, und um das erste Aktivierungssignal nur auszugeben, sobald die Abfrage erfolgreich abgeschlossen wurde.

6. Steuereinrichtung (1) nach einem der vorstehenden Ansprüche, wobei das zusätzliche Signal (AUX) ein Fahreridentifikationssignal umfasst, wobei der elektronische Prozessor (7) in Abhängigkeit des Fahreridentifikationssignals betriebsfähig ist; wobei das zusätzliche Signal (AUX) optional ein Türsensor(23)-Signal und/oder ein Gewichtssensor(24)-Signal umfasst, wobei der elektronische Prozessor (7) in Abhängigkeit des Türsensor(23)-Signals und/oder eines Gewichtssensor(24)-Signals betriebsfähig ist.

7. Steuereinrichtung (1) nach einem der vorstehenden Ansprüche, wobei die Fahrzeugantriebseinrichtung (4) einen Verbrennungsmotor (4) und/oder eine elektrische Traktionsmaschine umfasst; und/oder
das erste Aktivierungssignal (SIG_{EG1}) eine Motorstartanforderung und/oder eine Anlasserzuschaltanforderung umfasst.

8. Verfahren zum automatischen Aktivieren einer Fahrzeugantriebseinrichtung (4), wenn die Fahrzeugantriebseinrichtung (4) anfänglich ausgeschaltet ist, das Verfahren umfassend:
Empfangen mindestens eines ersten Steuersignals, das in Abhängigkeit der Fahrerbetätigung eines Getriebesteuergeräts (13) und/oder einer primären Fahrzeugsteuerung (15, 16, 17) erzeugt wird, die eine dynamische Funktion des Fahrzeugs (2) steuert;
Empfangen eines zusätzlichen Signals (AUX) von einem oder mehreren zusätzlichen Fahrzeugsystemen; und
in Abhängigkeit des ersten Steuersignals, Ausgeben mindestens eines ersten Aktivierungssignals zum automatischen Aktivieren der Fahrzeugantriebseinrichtung (4);
wobei das zusätzliche Signal (AUX) ein Blickverfolgungssignal umfasst, das von einer Augenverfolgungsvorrichtung empfangen wird, wobei das Blickverfolgungssignal die Richtung angibt, in die der Fahrer schaut, das Verfahren umfassend das Ausgeben des ersten Aktivierungssignals (SIG_{EG1}) nur, wenn das Blickverfolgungssignal angibt, dass der Fahrer in einen vorgegebenen Bereich schaut.

9. Verfahren nach Anspruch 8, umfassend das Versetzen der Fahrzeugantriebseinrichtung (4) in einen ersten Leistungsmodus in Abhängigkeit des ersten Aktivierungssignals (SIG_{EG1}).

10. Verfahren nach einem der Ansprüche 8 oder 9, umfassend:
Empfangen eines zweiten Steuersignals von einer zweiten Fahrzeugsteuerung; und
Ausgeben des ersten Aktivierungssignals (SIG_{EG1}) und/oder eines zweiten Aktivierungssignals (SIG_{EG2}) in Abhängigkeit des ersten und des zweiten Steuersignals;
das Verfahren optional umfassend das Versetzen der Fahrzeugantriebseinrichtung (4) in einen zweiten Leistungsmodus in Abhängigkeit des zweiten Aktivierungssignals (SIG_{EG2}).

11. Verfahren nach Anspruch 10, umfassend das Ausgeben des ersten Aktivierungssignals (SIG_{EG1}) und/oder des zweiten Aktivierungssignals (SIG_{EG2}) in Abhängigkeit des Empfangs des ersten und des zweiten Steuersignals in einer vorgegebenen Aktivierungssequenz.

12. Verfahren nach einem der Ansprüche 8 bis 11, wobei das zusätzliche Signal (AUX) ein Fahreridentifikationssignal umfasst; das zusätzliche Signal (AUX) optional umfassend ein Türsensor(23)-Signal und/oder ein Gewichtssensor(24)-Signal.

13. Verfahren nach einem der Ansprüche 8 bis 12, wobei das erste Aktivierungssignal (SIG_{EG1}) eine Motorstartanforderung oder eine Anlasserzuschaltanforderung umfasst.

14. Fahrzeug, umfassend eine Steuereinrichtung (1) nach einem der Ansprüche 1 bis 7.

## Revendications

1. Appareil de commande (1) pour activer automatiquement un appareil de propulsion de véhicule (4) lorsque l'appareil de propulsion de véhicule (4) est initialement éteint, l'appareil de commande (1) comprenant :
un dispositif de commande (6) comprenant un processeur électronique (7) ayant une entrée électrique pour recevoir au moins un premier signal de commande généré en fonction du fonctionnement du conducteur d'un dispositif de commande de transmission (13) et/ou d'une commande primaire de véhicule (15, 16, 17) qui commande une fonction dynamique d'un véhicule (2) ;
un dispositif de mémoire électronique (8) couplé électriquement au processeur électronique (7) et ayant des instructions stockées dans celui-ci ;
dans lequel le processeur électronique (7) est configuré pour accéder au dispositif de mémoire (8) et exécuter les instructions stockées dans celui-ci de telle sorte qu'il est utilisable pour :
recevoir ledit premier signal de commande de la première commande de véhicule (10) ;
recevoir un signal auxiliaire (AUX) d'un ou de plusieurs systèmes auxiliaires du véhicule ; et
en fonction dudit premier signal de commande, émettre en sortie au moins un premier signal d'activation (SIG_{EG1}) pour activer automatiquement l'appareil de propulsion du véhicule (4) ;
dans lequel le signal auxiliaire (AUX) comprend un signal de suivi du regard reçu d'un dispositif de suivi du regard, le signal de suivi du regard indiquant la direction dans laquelle le conducteur regarde, le premier signal d'activation (SIG_{EG1}) n'étant émis en sortie que lorsque le signal de suivi du regard indique que le conducteur regarde dans une région prédéterminée.

2. Appareil de commande (1) selon la revendication 1, dans lequel le premier signal d'activation (SIG_{EG1}) comprend une demande de placement de l'appareil de propulsion du véhicule (4) dans un premier mode de puissance.

3. Appareil de commande (1) selon la revendication 1 ou la revendication 2, dans lequel l'entrée électrique est adaptée à la réception d'un second signal de commande provenant d'une seconde commande de véhicule ;
dans lequel le processeur électronique (7) est agencé pour :
recevoir ledit premier signal de commande et ledit second signal de commande ; et
émettre en sortie le premier signal d'activation (SIG_{EG1}) et/ou un second signal d'activation (SIG_{EG2}) en fonction desdits premier et second signaux de commande, le second signal d'activation (SIG_{EG2}) comprenant éventuellement une demande visant à placer l'appareil de propulsion du véhicule (4) dans un second mode de puissance.

4. Appareil de commande (1) selon la revendication 3, dans lequel le processeur électronique (7) peut émettre en sortie le premier signal d'activation (SIG_{EG1}) et/ou le second signal d'activation (SIG_{EG2}) en fonction de la réception desdits premier et second signaux de commande dans une séquence d'activation prédéterminée.

5. Appareil de commande (1) selon l'une des revendications précédentes, dans lequel l'appareil de commande est configuré pour interroger une clé électronique afin de déterminer si le conducteur est autorisé à conduire le véhicule, et pour émettre en sortie le premier signal d'activation uniquement lorsque l'interrogation a été menée à bien.

6. Appareil de commande (1) selon l'une quelconque des revendications précédentes, dans lequel le signal auxiliaire (AUX) comprend un signal d'identification du conducteur, le processeur électronique (7) pouvant fonctionner en fonction dudit signal d'identification du conducteur ; dans lequel le signal auxiliaire (AUX) comprend éventuellement un signal du capteur de porte (23) et/ou un signal du capteur de poids (24), le processeur électronique (7) pouvant fonctionner en fonction dudit signal du capteur de porte (23) et/ou du capteur de poids (24).

7. Appareil de commande (1) selon l'une quelconque des revendications précédentes, dans lequel l'appareil de propulsion du véhicule (4) comprend un moteur à combustion interne (4) et/ou une machine de traction électrique ; et/ou
le premier signal d'activation (SIG_{EG1}) comprend une demande de démarrage du moteur et/ou une demande d'enclenchement du démarreur.

8. Procédé d'activation automatique d'un appareil de propulsion de véhicule (4) lorsque l'appareil de propulsion de véhicule (4) est initialement éteint, le procédé comprenant :
la réception d'au moins un premier signal de commande généré en fonction du fonctionnement du conducteur d'un dispositif de commande de transmission (13) et/ou d'une commande primaire du véhicule (15, 16, 17) qui commande une fonction dynamique du véhicule (2) ;
la réception d'un signal auxiliaire (AUX) provenant d'un ou de plusieurs systèmes auxiliaires du véhicule ; et
en fonction dudit premier signal de commande, émettre en sortie au moins un premier signal d'activation pour activer automatiquement l'appareil de propulsion du véhicule (4) ;
dans lequel le signal auxiliaire (AUX) comprend un signal de suivi du regard reçu d'un dispositif de suivi du regard, le signal de suivi du regard indiquant la direction dans laquelle le conducteur regarde, le procédé consistant à émettre en sortie le premier signal d'activation (SIG_{EG1}) uniquement lorsque le signal de suivi du regard indique que le conducteur regarde dans une région prédéterminée.

9. Procédé selon la revendication 8, consistant à placer l'appareil de propulsion du véhicule (4) dans un premier mode de puissance en fonction du premier signal d'activation (SIG_{EG1}).

10. Procédé selon l'une quelconque des revendications 8 ou 9, comprenant :
la réception d'un second signal de commande provenant d'une seconde commande de véhicule ; et
l'émission d'un premier signal d'activation (SIG_{EG1}) et/ou d'un second signal d'activation (SIG_{EG2}) en fonction desdits premier et second signaux de commande ;
le procédé consistant éventuellement à placer l'appareil de propulsion du véhicule (4) dans un second mode de puissance en fonction du second signal d'activation (SIG_{EG2}).

11. Procédé selon la revendication 10, comprenant l'émission en sortie du premier signal d'activation (SIG_{EG1}) et/ou du second signal d'activation (SIG_{EG2}) en fonction de la réception desdits premier et second signaux de commande dans une séquence d'activation prédéterminée.

12. Procédé selon l'une quelconque des revendications 8 à 11, dans lequel le signal auxiliaire (AUX) comprend un signal d'identification de pilote ; le signal auxiliaire (AUX) comprend éventuellement un signal du capteur de porte (23) et/ou un signal du capteur de poids (24).

13. Procédé selon l'une quelconque des revendications 8 à 12, dans lequel le premier signal d'activation (SIG_{EG1}) comprend une demande de démarrage du moteur ou une demande d'enclenchement du démarreur.

14. Véhicule comprenant un appareil de commande (1) selon l'une quelconque des revendications 1 à 7.
